(19) Europäisches Patentamt
European Patent Office
Office européen des brevets

(11) **EP 0 922 681 B2**

(12) **NOUVEAU FASCICULE DE BREVET EUROPEEN**

(45) Date de publication et mention de la décision concernant l'opposition:
**05.09.2007 Bulletin 2007/36**

(45) Mention de la délivrance du brevet:
**04.08.2004 Bulletin 2004/32**

(51) Int Cl.:
**C03C 17/36** (2006.01)

(21) Numéro de dépôt: **98403114.6**

(22) Date de dépôt: **10.12.1998**

(54) **Substrat transparent muni de couches minces à propriétés de réflexion dans l'infrarouge**

Durchsichtiges Substrat mit einem Dünnschichtaufbau mit Infrarot reflaktierenden Eigenschaften

Transparent substrate coated with thin infrared radiation reflecting layers

(84) Etats contractants désignés:
**AT BE CH DE ES FR GB IE IT LI LU NL SE**

(30) Priorité: **11.12.1997 DE 19755002**

(43) Date de publication de la demande:
**16.06.1999 Bulletin 1999/24**

(73) Titulaire: **SAINT-GOBAIN GLASS FRANCE**
**92400 Courbevoie (FR)**

(72) Inventeurs:
• **Schicht, Heinz**
**06925 Bethau (DE)**
• **Schmidt, Uwe**
**04895 Falkenberg/Elster (DE)**
• **Kaiser, Wilfried**
**04860 Torgau (DE)**
• **Hryniw, Bodo**
**04860 Torgau (DE)**

(74) Mandataire: **Renous Chan, Véronique**
**Saint-Gobain Recherche,**
**39, Quai Lucien Lefranc**
**93300 Aubervilliers (FR)**

(56) Documents cités:
EP-A- 0 308 578     EP-A- 0 543 077
EP-A- 0 738 694     EP-A- 0 751 099
EP-A- 0 894 774     WO-A-93/02056

EP 0 922 681 B2

**Description**

L'invention se rapporte à un empilement de couches à propriétés de réflexion dans l'infrarouge et/ou dans le domaine du rayonnement solaire, en particulier de type bas-émissif, pour des substrats transparents, en particulier des vitrages. Ce type d'empilement comprend une couche de traitement antireflet diélectrique inférieure, au moins une couche fonctionnelle à base d'argent, au moins une couche de protection métallique, disposée sur ou/et en dessous de la couche d'argent, ainsi qu'une couche de traitement antireflet supérieure comprenant plusieurs couches partielles de diélectrique.

Au sens de l'invention, la "couche " antireflet en diélectrique inférieure se compose d'une couche ou d'une superposition d'au moins deux couches en matériau diélectrique, du type oxyde métallique de nitrure (comme AIN ou $Si_3N_4$ par exemple), ou encore des oxynitrures de métal ou de silicium. De même, la "couche" antireflet supérieure comprend une séquence de plusieurs couches à base de matériau diélectrique du type oxyde métallique mais peut comprendre en outre d'autres couches de diélectrique du type des nitrures ou oxynitrures mentionnés plus haut.

Des empilements de couches du type bas-émissif de ce genre sont connus avec différents modes de réalisation. Ils sont fabriqués généralement avec un procédé de pulvérisation cathodique assistée par champ magnétique, les couches d'oxydes métalliques à partir de cibles métalliques étant déposées d'une manière réactive à l'aide d'un gaz réactif contenant de l'oxygène (et les nitrures avec un gaz réactif contenant de l'azote). Les couches de protection métalliques d'un métal à affinité relativement plus élevée par rapport à l'oxygène, au voisinage immédiat de la ou des couches d'argent, servent à protéger la couche d'argent de l'oxygène s'introduisant par diffusion, non seulement lors du procédé de pulvérisation cathodique réactive subséquent de la couche de traitement antireflet, mais aussi lors d'un traitement thermique éventuel ultérieur et lors de l'utilisation selon leur fonction des vitrages revêtus.

Les vitrages revêtus sont empilés en règle générale les uns sur les autres sous forme de grands paquets et sont transportés sur des distances importantes, placés en position légèrement inclinée sur des montures de transport appropriées. Dans le cas de trajets de transport prolongés, les couches sont exposées, en raison des vibrations, à des sollicitations mécaniques particulières. Ces sollicitations mécaniques peuvent conduire à une détérioration de l'empilement, qui se traduit généralement par des défauts visuels du genre rayure ou hachure.

On sait que des empilements de couches ayant une couche de traitement antireflet "supérieure" (au dessus de la ou des couches fonctionnelles du type argent), qui se compose seulement d'un seul oxyde métallique, par exemple en $SnO_2$, en ZnO, en $TiO_2$, en $Bi_2O_3$ ou en $Al_2O_3$, sont relativement sensibles vis-à-vis des sollicitations mécaniques et chimiques. C'est la raison pour laquelle on connaît diverses suggestions en vue de la réalisation d'une structure multicouche de la couche de traitement antireflet, visant à améliorer la résistance chimique et mécanique des empilements de couches de ce genre.

Un empilement de couches ayant une résistance améliorée vis-à-vis des conditions environnementales et vis-à-vis des sollicitations mécaniques est connu à partir du document EP 0593883 B1. Dans le cas de cet empilement de couches connu, la couche de traitement antireflet supérieure se compose d'une couche triple non métallique ayant de préférence deux couches de composition chimique identique, de l'oxyde de zinc et du dioxyde de titane étant pulvérisés de préférence à tour de rôle. Pendant la procédure de revêtement, il se forme en l'occurrence une couche de titanate de zinc qui se situe dans le domaine sous-nanométrique, qui renforce l'action de protection de la couche de protection métallique disposée sur la couche d'argent vis-à-vis des influences environnementales. On dispose en outre de préférence une couche superficielle non métallique en $TiO_2$ sur la couche de traitement antireflet triple non métallique.

La fabrication d'un empilement de couches de ce genre, avec des couches de dioxyde de titane, est relativement compliquée, parce que les couches de dioxyde de titane ne peuvent être fabriquées qu'à une vitesse de pulvérisation relativement basse. Il faut, de surcroît, prévoir dans l'installation de revêtement en continu, en vue de l'application de la couche de traitement antireflet triple, au moins trois positions de cathode pour la couche de traitement antireflet, qui ne sont pas toujours présentes dans les installations de revêtement existantes.

En vue de l'amélioration de la résistance aux rayures de l'empilement de couches de type bas-émissif, on sait aussi procéder au dépôt, sur la couche de traitement antireflet supérieure, d'une couche superficielle mince en un matériau de dureté élevée. en particulier en $Si_3N_4$, en $SiO_2$ ou en $TiO_2$. Des suggestions de ce genre sont connues par exemple du document déjà cité EP 0593883 B1, ainsi que du document WO 95/29883 et du document DE 19530331 A1. Il s'est cependant avéré que les empilements de couches, même pourvus de couches superficielles dures de ce genre, ne manifestent aucune amélioration satisfaisante du comportement vis-à-vis du transport, du moins lorsque la couche de traitement antireflet déposée sous cette couche superficielle est relativement mince, à savoir de moins de 30 nm, ce qui peut cependant être nécessaire pour l'obtention de couleurs en transmission et/ou en réflexion déterminées. Malgré une amélioration nette d autres propriétés mécaniques, on observe également les dégâts mécaniques décrits, comme les rayures et les hachures, même dans le cas d'empilements de couches pourvus d'une couche superficielle dure, quand des paquets de vitrages ainsi revêtus sont exposés aux vibrations de transport pendant des trajets prolongés.

Le but de la présente invention est, par conséquent, de développer un empilement de couches à propriétés de réflexion dans l'infrarouge et/ou dans le domaine du rayonnement solaire, tout particulièrement du type bas-émissif, qui, non seulement possède des propriétés comparables à celles des empilements de couches connus, mais qui présentent en outre une capacité de résistance mécanique élevée, en particulier vis-à-vis des sollicitations mécaniques se produisant au cours de longs trajets de transport.

La solution selon l'invention consiste à ce que, pour l'empilement de couches du genre mentionné plus haut, la couche de traitement antireflet supérieure comprend une couche partielle inférieure en $SnO_2$, en $ZnO$, en $TiO_2$, , en $Bi_2O_3$ ou en $Al_2O_3$, et d'une couche partielle supérieure en un oxyde mixte à base de zinc et d'aluminium, ayant une structure de spinelle du type $ZnAl_2O_4$. L'épaisseur de cette couche d'oxyde mixte est de préférence d'au moins 2 ou 3 nm et généralement choisie entre 4 et 8 nm.

Les termes " inférieur ", " supérieur " utilisés se rapportent à la position relative des couches de l'empilement en fonction de leur éloignement par rapport à la face du substrat sur laquelle est déposée l'empilement, sans exclure la présence de couches " intercalaires" supplémentaires. Ainsi, la couche de traitement antireflet comprend la séquence composée d'une couche partielle inférieure et d'une couche partielle supérieure, mais elle peut aussi comprendre une ou plusieurs couches en diélectrique sous la couche "partielle inférieure" et/ou sur la couche "partielle supérieure".

L'invention s'applique ainsi à des empilements à une couche fonctionnelle (c'est-à-dire une couche qui apporte la fonction thermique recherchée du type d'argent), mais aussi à deux couches fonctionnelles dans des empilements qui sont schématiquement du type :

revêtement diélectrique 1 / Ag / revêtement diélectrique 2 / Ag / revêtements diélectrique 3.

(Pour ce type d'empilement à deux couches fonctionnelles, on peut se reporter par exemple au brevet EP-638 528, et pour un empilement à trois couches d'argent au brevet EP-645 352).

La couche partielle supérieure en un oxyde mixte à structure de spinelle est appliquée avantageusement par pulvérisation cathodique réactive à l'aide d'une cible de l'alliage métallique correspondant. L'alliage métallique utilisé présente en l'occurrence une composition qui correspond au rapport stoechiométrique des métaux dans le spinelle correspondant. Pour le composé $ZnAl_2O_4$, la composition stoechiométrique se situe à environ 54,8 % en poids de Zn et à environ 45,2 % en poids d'Al.

En fonction de l'oxyde métallique dont se compose la couche partielle inférieure de la couche de traitement antireflet supérieure, il peut être approprié de s'écarter quelque peu de la composition stoechiométrique. Si, par exemple, la couche partielle inférieure de la couche de traitement antireflet se compose de $SnO_2$, de $Al_2O_3$ ou de $TiO_2$, il est avantageux, pour procéder à la pulvérisation cathodique de la couche partielle supérieure, d'utiliser une cible, pour laquelle la proportion de zinc dans l'alliage est légèrement sur-stoechiométrique, parce que, de cette façon, il se produit une meilleure formation de spinelle à la surface limitrophe. Si, par contre, la couche partielle inférieure de la couche de traitement antireflet supérieure se compose de $ZnO$, il est recommandé de choisir une cible en un alliage, dans le cas du spinelle de $ZnAl_2O_4$, une proportion légèrement sur-stoechiométrique en Al. Pour l'alliage de ZnAl, on choisit de préférence une proportion de 40 à 70% en poids de Zn, notamment entre 50 et 60 % en poids de Zn, et 30 à 60 % en poids d'Al, de préférence 40 à 50% d'Al.

Les couches d'oxydes mixtes citées présentant une structure de spinelle peuvent être déposées par pulvérisation cathodique sans difficultés techniques sur les couches partielles inférieures. Elles ont pour effet, de manière surprenante, une amélioration significative de la résistance aux rayures et en particulier de la stabilité au transport des vitrages revêtus, et cela certes même pour des systèmes de couches particulièrement sensibles aux rayures.

L'effet observé a certainement d'une part, en partie, sa raison d'être dans le fait que l'oxyde mixte Zn/Al, quand il présente une structure de spinelle, forme une couche de protection mécanique particulièrement dure. D'autre part, il contribue également à l'augmentation constatée de la stabilité au transport. Cela tient probablement au fait que cette couche d'oxyde mixte, sous forme de spinelle, présente un empilement de sphères hexagonal ou cubique dense et qu'il forme, par conséquent, une couche-barrière extrêmement efficace vis-à-vis des processus de diffusion. On peut, en effet, supposer que des processus de diffusion dans la couche superficielle de l'empilement de couches sont responsables de dégâts superficiels mécaniques observés lors du transport. Des études correspondantes ont, de fait, montré que les ions argent diffusent jusqu'à la surface de l'empilement de couches et qu'ils y réagissent avec les petites billes en polyacrylate servant en tant qu'agent d'espacement. A la surface de ces billes, se forment apparemment en l'occurrence des acrylates d'argent, par conséquent des sels qui peuvent vieillir les billes à la surface et conduire à une incrustation. Ces billes d'acrylate vieillies sont apparemment une cause substantielle de l'endommagement de l'empilement de couches sous l'action des vibrations lors du transport.

Une couche de traitement antireflet supérieure réalisée selon l'invention possède, par conséquent, diverses propriétés avantageuses qui conduisent dans leur ensemble à l'amélioration recherchée de l'empilement, et en particulier à une augmentation substantielle de la stabilité au transport. La dureté propre élevée assure une capacité de résistance aux rayures plus élevée, la structure de spinelle dense constitue une barrière de diffusion efficace pour la diffusion des ions d'argent et l'oxyde mixte cité a une bonne compatibilité de surfaces avec la couche voisine d'oxyde métallique. Une bonne compatibilité de surfaces signifie qu'à l'interface entre les couches, il y a formation de nouvelles phases de composés qui garantissent une bonne liaison entre ces couches et qui contribuent de leur côté également à l'augmentation de la dureté de l'empilement dans son ensemble et à la diminution des possibilités de diffusion des ions d'argent.

Selon un mode de réalisation non limitatif de l'invention, une couche superficielle termine l'empilement, en étant de préférence déposée sur la couche partielle supérieure de la couche de traitement antireflet supérieure. Cette couche terminale peut être à base de $TiO_2$, $ZrO_2$, $Cr_2O_3$ ou mélange de ceux-ci, et on choisit son épaisseur géométrique d'au moins 2 nm, notamment entre 2 et 6 ou 3 et 5 nm.

L'invention est décrite dans la suite par référence à deux exemples de comparaison et deux exemples de réalisation. Dans tous les cas, on a soumis des échantillons de vitrages, qui ont été munis de l'empilement de couches correspondant dans une installation de revêtement à magnétron industrielle, à trois tests qui montrent clairement l'amélioration apportée par l'invention :

A) Le test "Lucite" est décrit dans le brevet DE 19530331 A1. Dans le cas de ce test, on introduit dans une chambre un échantillon revêtu ayant les dimensions 12 x 25 cm avec la couche vers le haut, et on pulvérise à l'aide de 100 g d'une poudre de PMMA du type SEPAROL de la société Aachener Chemische Werke. Le produit SEPAROL est un produit à pureté et à granulométrie strictement contrôlée et est utilisé dans une large mesure en tant qu'agent séparateur entre les vitrages d'un paquet de verres. On place alors sur l'échantillon revêtu et pulvérisé à l'aide du produit SEPAROL un vitrage non revêtu de mêmes dimensions. On place sur le vitrage supérieur une plaque de pression de 3,983 kg. On impartit un mouvement de va-et-vient sur une course de 5 cm à la plaque de pression pendant plus de 3000 cycles à une fréquence de 60 cycles par minute. Après l'essai, on procède à l'examen de la couche en ce qui concerne des rayures et des marques sous forme de filaments (hachures);

B) Le test de lavage conformément à la norme ASTMD 2486, et

C) ce que l'on appelle la "méthode de la plaque conformément à Kimmel et al", Z. Glastechnische Berichte 59 (1986), page 252 et suivantes. Grâce à cette méthode, on détermine le comportement de lessivage d'Ag* de la couche. On détermine de manière photométrique l'argent contenu dans la solution de lessivage.

## Exemple de comparaison 1

On a fabriqué des échantillons de vitrages de verre flotté revêtus, ayant la structure de couches suivante, la couche de CrNi ayant été déposée par pulvérisation cathodique d'une cible d'un alliage de CrNi avec 20 % en poids de Cr et 80 % en poids de Ni; les chiffres précédant le matériau de couche indiquent à chaque fois l'épaisseur géométrique de la couche en question en nm :

Verre-40 $SnO_2$ - 2 CrNi - 11 Ag - 4 CrNi - 24 $SnO_2$.

On a soumis les échantillons aux tests cités plus haut. Les tests conduisent aux résultats suivants.

Test Lucite :          On a constaté sur la couche en 4 endroits des marques filamenteuses (hachures) ;
Test de lavage :       Des défauts et des décollements sont apparus après 700 mouvements aller-retour ;
Méthode de la plaque :    La quantité d'argent contenue dans la solution à la suite du lessivage était de 0,7 mg/l.

On a transporté en outre plusieurs paquets de vitrages, d'un poids à chaque fois de 12 tonnes, de dimensions 6,0 x 3,21 m, avec de la poudre SEPAROL-F en tant que couche intermédiaire entre les vitrages, sur des camions surbaissés sur des distances de 600 km, et on les a alors examinés visuellement pour ce qui est des hachures sur la couche. A la surface des vitrages, on a constaté à chaque fois des détérioration des couches sous forme de hachures.

## Exemple de comparaison 2

On a soumis, aux mêmes tests, des échantillons de verre flotté revêtus ayant la même structure de couche, avec, toutefois, une couche de traitement antireflet supérieure plus épaisse. La couche avait la structure suivante :

Verre - 40 $SnO_2$ - 2 CrN i- 11 Ag - 4 CrNi - 44 $SnO_2$.

Les résultats des trois tests de ces échantillons étaient comme suit :

Test Lucite:           Des marques filamenteuses (hachures) sont apparues en 1 endroit ;

test de lavage :                        Des défauts et des décollements sont à nouveau apparus après 700 mouvements aller-retour;

Méthode de la plaque :        La quantité d'argent contenue dans la solution à la suite du lessivage était de 0,15 mg/l.

Lors de l'essai de transport réel, qui a été effectué comme dans le cas de l'exemple de comparaison 1, il n'y a eu apparition de marques filamenteuses individuelles que dans quelques cas d'exception.

## Exemple de réalisation 1

On a procédé au revêtement, sur la même installation industrielle que celle utilisée dans les exemples de comparaison, de vitrages de verre flotté ayant la structure de couches suivante :

$$\text{Verre - 40 SnO}_2\text{ - 2 CrNi - 11 Ag - 4 CrNi - 20 SnO}_2\text{ - 5 ZnAl}_2\text{O}_4$$

On a procédé à l'application par pulvérisation cathodique réactive de la couche partielle de $ZnAl_2O_4$ à l'aide d'une cible métallique qui se composait de 55 % en poids de Zn et de 45 % en poids de Al, et on l'a fait avec une pression partielle d'oxygène dans le gaz de travail de manière à former un composé entièrement stoechiométrique. On obtient, avec ces échantillons, les résultats suivants :

Test Lucite :                        Il n'est apparu aucune hachure ou rayure quelconque;

Test de lavage :                On a observé les premiers défauts ou décollements de couche seulement après 2000 mouvements aller-relour ;

Méthode de plaque :        On n'a constaté aucun argent lessivé dans la solution.

Des essais de transport réels effectués à plusieurs reprises sur des trajets de plus de 600 km en rase campagne n'ont indiqué en aucun cas des détériorations de l'empilement des couches.

## Exemple de réalisation 2

Sur la même installation de revêtement que celle utilisée pour les exemples précédents, on a procédé au revêtement de vitrages de verre flotté ayant une structure de couches comparable à l'exemple de réalisation 1, avec, toutefois, une application sur la couche partielle supérieure en $ZnAl_2O_4$, d'une couche supplémentaire superficielle en $TiO_2$. Les conditions de pulvérisation cathodique ont été ajustées à nouveau de sorte que la couche de $ZnAl_2O_4$, se forme dans le rapport stoechiométrique. La couche de finition de $TiO_2$ a été déposée à l'aide d'une cathode DMS (cathode de pulvérisation à magnétron double) à une puissance 60 kW avec un gaz de travail obtenu à partir d'un mélange $Ar/O_2/N_2$. L'empilement avait la structure de couches suivante :

$$\text{Verre - 40 SnO}_2\text{ - 2 CrNi - 11 Ag - 4 CrNi - 20 SnO}_2\text{ - 3 ZnAl}_2\text{O}_4\text{ - 4 TiO}_2.$$

Les tests ont fourni les résultats suivants :

Test Lucite :                        Aucune hachure ou rayure ou défaut quelconque;

test de lavage :                Premiers défauts et décollements de couche seulement après plus de 2600 mouvements aller-retour;

Méthode de plaque :        On n'a constaté dans la solution aucun argent lessivé.

Des essais de transport réels effectués de manière répétée sur des trajets de transports de plus de 600 km en rase-campagne n'ont mis en évidence, aucune détérioration de l'empilement.

On a effectué, de surcroît, sur ces échantillons, ce que l'on appelle le test d'eau de sudation, lors duquel on entrepose les échantillons à une température de 60°C et à une humidité relative de l'air de 100 %. L'empilement n'a manifesté aucune détérioration, même après une période de plus 200 heures d'entreposage dans ces conditions. Des paquets de vitrages ayant un empilement de couches de ce genre peuvent être entreposés et expédiés sans effet de colmatage des rebords.

Il est à noter que des oxydes mixtes à base de Zn et d'Al mais non nécessairement dans des proportions stoechiométriques permettant d'obtenir une structure de spinelle sont également intéressants et font partie de l'invention, tout comme des oxydes de Zn et d'Al contenant également éventuellement des constituants minoritaires autres que Zn et Al, du type impuretés par exemple, ou des oxydes de Zn et d'Al faiblement nitrurés.

Les vitrages selon l'invention, une fois l'assemblage terminé, peuvent être utilisés dans des bâtiments ou des véhicules (voiture, avion, train), sous forme notamment de vitrages isolants multiples, de vitrages simples ou de vitrages feuilletés (les empilements se trouvant tournés généralement vers la lame de gaz intercalaire du vitrage isolant ou la feuille de polymère intercalaire du vitrage feuilleté).

**Revendications**

1. Substrat transparent muni d'un empilement de couches minces à propriétés de réflexion dans l'infrarouge et/ou dans le domaine du rayonnement solaire du type bas-émissif, en particulier un vitrage, ledit empilement ayant une couche de traitement antireflet diélectrique inférieure, au moins une couche fonctionnelle à base d'argent, au moins une couche de protection métallique disposée sur ou/et en dessous de la (des) couche(s) d'argent, ainsi qu'une couche de traitement antireflet supérieure comprenant une séquence de plusieurs couches partielles d'oxydes métalliques, *caractérisé en ce que* la couche de traitement antireflet supérieure comprend une couche partielle inférieure en $SnO_2$, en ZnO, en $TiO_2$, en $Bi_2O_3$, ou en $Al_2O_3$, et une couche partielle supérieure en un oxyde mixte à base de zinc et d'aluminium, à structure de spinelle du type $ZnAl_2O_4$.

2. Substrat selon la revendication 1, *caractérisé en ce que* l'épaisseur de la couche partielle supérieure de la couche de traitement antireflet supérieure est d'au moins de 2 nm, et de préférence d'au moins 3 nm, notamment de 4 à 8 nm.

3. Substrat selon la revendication 1 ou 2, *caractérisé en ce que* la couche partielle supérieure de la couche de traitement antireflet supérieure est formée par pulvérisation cathodique réactive d'une cible à base d'alliage zinc-aluminium avec de 40 à 70 % en poids de Zn et de 30 à 60 % en poids de Sn, notamment de 50 à 60% en poids de Sn et de 40 à 50% en poids d'Al.

4. Substrat selon l'une ou plusieurs des revendications précédentes, *caractérisé en ce qu'une* couche superficielle à base de $TiO_2$, $ZrO_2$, ou $Cr_2O_3$ ou mélange de ceux-ci est disposée sur la couche partielle supérieure de la couche de traitement antireflet supérieure.

5. Substrat selon la revendication 4, *caractérisé en ce que* ladite couche superficielle a une épaisseur géométrique d'au moins 2 nm, notamment comprise entre 2 et 6 ou 3 et 5 nm.

**Claims**

1. Transparent substrate provided with a stack of thin layers with properties of reflection in the infrared range and/or in the solar radiation range of the low emissive type, in particular a glazing pane, the said stack having a bottom dielectric non-reflection treatment layer, at least one functional layer based on silver, at least one metallic protective layer disposed on and/or under the silver layer or layers, as well as a top non-reflection treatment layer comprising a sequence of several partial layers of metallic oxides, **characterised in that** the top non-reflection treatment layer comprises a bottom partial layer of $SnO_2$, ZnO, $TiO_2$, $Bi_2O_3$ or $Al_2O_3$, and a top partial layer made from a mixed oxide based on zinc and aluminium, with a spinel structure of the $ZnAl_2O_4$ type.

2. Substrate according to Claim 1, **characterised in that** the thickness of the top partial layer of the top non-reflection treatment layer is at least 2 nm, and preferably at least 3 nm, in particular 4 to 8 nm.

3. Substrate according to Claim 1 or 2, **characterised in that** the top partial layer of the top non-reflection treatment layer is formed by reactive cathodic sputtering of a target based on zinc- aluminium alloy with 40 to 70% by weight Zn and 30 to 60% by weight Sn, in particular 50 to 60% by weight Sn and 40 to 50% by weight Al.

4. Substrate according to one or more of the preceding claims, **characterised in that** a surface layer based on $TiO_2$, $ZrO_2$ or $Cr_2O_3$ or a mixture of these is disposed on the top partial layer of the top non-reflection treatment layer.

5. Substrate according to Claim 4, **characterised in that** the said surface layer has a geometric thickness of at least 2 nm, in particular between 2 and 6 or 3 and 5 nm.

**Patentansprüche**

1. Transparentes Substrat, insbesondere eine Verglasung, versehen mit einem Dünnschichtsystem mit Infrarot- und/oder Sonnenstrahlung reflektierenden Eigenschaften vom Typ Low-E, wobei das besagte Schichtsystem eine untere dielektrische Entspiegelungsschicht hat, wenigstens eine Funktionsschicht auf Silberbasis, wenigstens eine, über oder unter der/den Silberschicht/en angeordnete metallische Schutzschicht, sowie eine obere, eine Anordnung mehrerer Metalloxid-Teilschichten umfassende Entspiegelungsschicht, **dadurch gekennzeichnet, dass** die obere Entspiegelungsschicht eine untere Teilschicht aus $SnO_2$, $ZnO$, $TiO_2$, $Bi_2O_3$ oder $Al_2O_3$, und eine obere Teilschicht aus einem Mischoxid auf Zink- und Aluminiumbasis, mit Spinellstruktur des Typs $ZnAl_2O_4$ umfasst.

2. Substrat nach Anspruch 1, **dadurch gekennzeichnet, dass** die Dicke der oberen Teilschicht der oberen Entspiegelungsschicht wenigstens 2 nm, und vorzugsweise wenigstens 3 nm, insbesondere 4 bis 8 nm beträgt.

3. Substrat nach Anspruch 1 oder 2, **dadurch gekennzeichnet, dass** die obere Teilschicht der oberen Entspiegelungsschicht durch reaktive Kathodenzerstäubung eines Targets aus einer Zink-Aluminium- Legierung mit 40 bis 70 Gew.-% Zn und 30 bis 60 Gew.-% Sn, insbesondere 50 bis 60 Gew.- % Sn und 40 bis 50 Gew.-% Al gebildet ist.

4. Substrat nach einem oder mehreren der vorhergehenden Ansprüche, **dadurch gekennzeichnet, dass** eine Deckschicht auf Basis von $TiO_2$, $ZrO_2$ oder $Cr_2O_3$ oder einem Gemisch aus diesen, auf der oberen Teilschicht der oberen Entspiegelungsschicht angeordnet ist.

5. Substrat nach Anspruch 4, **dadurch gekennzeichnet, dass** die besagte Deckschicht eine geometrische Dicke von wenigstens 2 nm, insbesondere zwischen 2 und 6 oder 3 und 5 nm aufweist.

**EP 0 922 681 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0593883 B1
- WO 9529883 A
- DE 19530331 A1
- EP 638528 A
- EP 645352 A